# EUROPEAN PATENT SPECIFICATION

(11) **EP 4 002 915 B1**
(45) Date of publication and mention of the grant of the patent: **06.08.2025**
(21) Application number: 20849155.5
(22) Date of filing: 15.06.2020
(51) Int. Cl.: H04W 36/00, H04W 36/18

(54) **HANDOVER METHOD, SYSTEM FOR HANDOVER, AND TERMINAL DEVICE**
WEITERREICHUNGSVERFAHREN, WEITERREICHUNGSSYSTEM UND ENDGERÄT
PROCÉDÉ DE TRANSFERT, SYSTÈME DE TRANSFERT ET ÉQUIPEMENT TERMINAL

(30) Priority: 02.08.2019 CN 201910710211
(43) Date of publication of application: 25.05.2022
(73) Proprietor: Huawei Technologies Co., Ltd., Longgang District Shenzhen, Guangdong 518129 (CN)
(72) Inventor: ZHANG, Hongping, Shenzhen, Guangdong 518129 (CN)
(74) Representative: Isarpatent
(86) International application number: PCT/CN2020/096082
(87) International publication number: WO 2021/022910

(56) References cited:
- WO-A1-2018/209582
- CN-A- 107 371 195
- CN-A- 107 454 634
- US-A1- 2018 220 336
- US-A1- 2019 007 875
- US-A1- 2019 007 875
- US-B1- 10 015 708
- ZTE: "Maintenance for Physical random access channel and procedure", 3GPP DRAFT; R1-1810812 DETAILS AND EVALUATION ON ENHANCED BEAM REPORTING, vol. RAN WG1, 29 September 2018 (2018-09-29), Chengdu, China, pages 1 - 4, XP051518217

## Description

### TECHNICAL FIELD

This application relates to the communication field, and in particular, to a handover method, and a system for handover.

### BACKGROUND

In a communication network, when a terminal device using a network service moves from one cell to another cell, or due to a traffic load adjustment, a device failure, or the like, a system needs to transfer a communication link between the terminal device and a source cell to a new cell, to ensure continuity of communication and quality of service. This process is referred to as handover.

In a process in which the terminal device is handed over from the source cell to a target cell, a short signal interruption and a latency may be caused. To implement non-interruption, the terminal device may be simultaneously connected to a source base station and a target base station in the handover process, and is disconnected from the source base station after the terminal device successfully accesses the target cell.

However, when the source cell and the target cell are intra-frequency neighboring cells, if the terminal device is simultaneously connected to the source base station and the target base station, very severe co-channel interference is generated, and communication quality is degraded.

WO 2018/209582 A1 discloses a handover control method and an apparatus. The method comprises: a first network apparatus sending to a terminal a handover instruction, the handover instruction comprising at least one of the following: a first start time, a first duration, a second start time, and a second duration; and performing data transmission with the terminal during an idle period, the idle period comprising at least one of the following: a period from the end of the first duration to the second start time, and a period from the end of the second duration to the first start time.

US 2018/220336 A1 discloses a method and a device for controlling mobility, which reduce a delay or service interruption occurring in a handover process of a terminal. The method of a terminal may include receiving an RRC connection reconfiguration message including mobility control information from a master eNB, controlling data transmission to or data reception from a source secondary eNB to be maintained up to a specific point of time on the basis of the mobility control information, and transmitting a random access channel (RACH) for performing a random access procedure to a target secondary eNB.

US 2019/007875 A1 discloses methods and an apparatus for seamless handover of a User Equipment (UE) between base stations using dual connectivity. The UE receives an indication of a handover of the UE from a source Base Station (BS) to a target BS, wherein the source BS and the target BS are associated with the same Radio Access Technology (RAT).

### SUMMARY

This application provides a handover method, and a system for handover, as defined in the appended set of claims, to avoid co-channel interference, ensure uninterrupted signal transmission in an intra-frequency handover process, and improve communication quality of intra-frequency handover.

In the handover method provided in the present application, the source base station, the target base station, and the terminal device all obtain the first indication information. In an intra-frequency handover process, the terminal device transmits data with one of the source base station and the target base station at any time, thereby avoiding co-channel interference caused when the terminal device simultaneously transmits data with the source base station and the target base station, ensuring uninterrupted signal transmission in the intra-frequency handover process, and improving communication quality of intra-frequency handover.

The communication device or the terminal device may alternatively be an integrated circuit (integrated circuit, IC) chip or the like that can implement a same function.

### BRIEF DESCRIPTION OF DRAWINGS

FIG. 1 is an architectural diagram of a communication system to which an embodiment of this application is applicable;
FIG. 2 is a message exchange diagram of an existing handover method;
FIG. 3 is a message exchange diagram of a handover method according to an embodiment of this application;
FIG. 4 is another message exchange diagram of a handover method according to an embodiment of this application;
FIG. 5 is still another message exchange diagram of a handover method according to an embodiment of this application;
FIG. 6 is still another message exchange diagram of a handover method according to an embodiment of this application;
FIG. 7 is a schematic diagram of a structure of a source base station according to an embodiment of this application;
FIG. 8 is a schematic diagram of a structure of a target base station according to an embodiment of this application;
FIG. 9 is a schematic diagram of a structure of a terminal device according to an embodiment of this application; and
FIG. 10 is a schematic diagram of a structure of a communication device according to an embodiment of this application.

### DESCRIPTION OF EMBODIMENTS

The following describes the embodiments of this application with reference to the accompanying drawings.

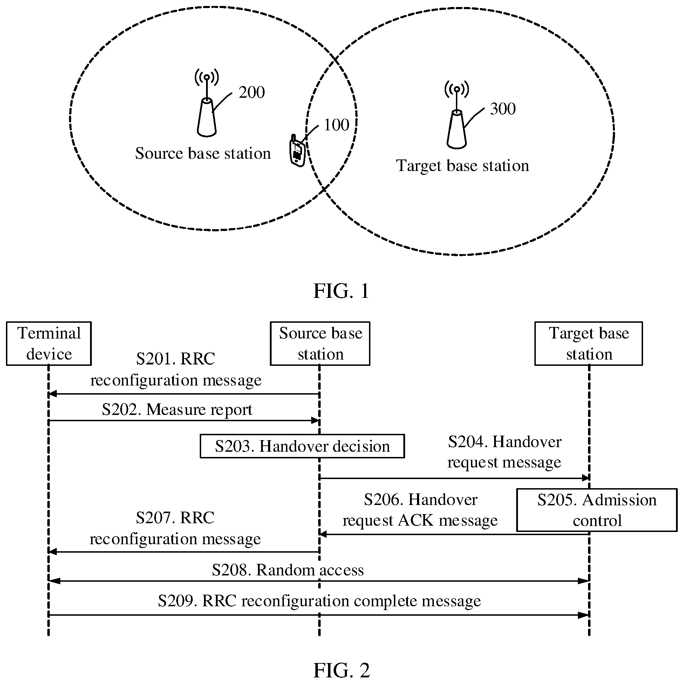

FIG. 1 is an architectural diagram of a communication system to which an embodiment of this application is applicable. As shown in FIG. 1, the communication system may include a terminal device 100, a source base station 200, and a target base station 300. Names of the terminal device 100, the source base station 200, and the target base station 300 are not limited in this embodiment of this application. For example, a base station may also be referred to as a network device. The source base station may also be referred to as a source network device, and the target base station may also be referred to as a target network device. Quantities of the terminal device 100, the source base station 200, and the target base station 300 are not limited in this embodiment of this application. The source base station 200 and the target base station 300 respectively have specific coverage areas. The coverage areas of the source base station 200 and the target base station 300 may have an overlapping area. A terminal device located in a coverage area of the source base station 200 may communicate with the source base station 200 in a wireless manner. A terminal device located in a coverage area of the target base station 300 may communicate with the target base station 300 in the wireless manner. A terminal device located in the overlapping area may communicate with the source base station 200 and the target base station 300 in the wireless manner. For communication between the source base station 200 and the terminal device 100, when the source base station 200 serves as a sender, the source base station 200 may send downlink information to the terminal device 100. Correspondingly, the terminal device 100 serves as a receiver, and may receive the downlink information sent by the source base station 200. When the terminal device 100 serves as a sender, the terminal device 100 may send uplink information to the source base station 200. Correspondingly, the source base station 200 serves as a receiver, and may receive the uplink information sent by the terminal device 100. The terminal device 100 may be at a fixed position, or may be movable.

Optionally, the communication system may further include another device. For example, the communication system may further include a core network device (not shown in FIG. 1). The source base station 200 and the target base station 300 may be connected to the core network device in a wireless or wired manner. The core network device, the source base station 200, and the target base station 300 may be independent and different physical devices. Alternatively, functions of the core network device and functions of the source base station 200 and the target base station 300 may be integrated into a same physical device. Alternatively, some functions of the core network device and some functions of the source base station 200 and the target base station 300 may be integrated into one physical device. For another example, the communication system may further include a wireless relay device or a wireless backhaul device (not shown in FIG. 1).

The source base station 200 and the target base station 300 are apparatuses configured to transmit and receive signals on a network side, for example, a radio access network (radio access network, RAN) node that connects a terminal device to a wireless network. Currently, for example, the RAN node is a next-generation NodeB (generation Node B, gNB) in a new radio access technology (new radio access technology, NR) (or 5G or new radio) system, a transmission reception point (transmission reception point, TRP), an evolved NodeB (evolved Node B, eNB), a radio network controller (radio network controller, RNC), a NodeB (Node B, NB), a base station controller (base station controller, BSC), a base transceiver station (base transceiver station, BTS), a home base station (for example, a home evolved NodeB or a home Node B, HNB), a baseband unit (base band unit, BBU), a relay station, or a wireless fidelity (wireless fidelity, Wi-Fi) access point (access point, AP). In a network structure, the network device may include a centralized unit (centralized unit, CU) node, a distributed unit (distributed unit, DU) node, or a RAN device including a CU node and a DU node. Wireless coverage areas of the source base station 200 and the target base station 300 may include one or more cells. The terminal device 100 in a coverage area of the cell uses a transmission resource (for example, a frequency domain resource, a spectrum resource, or a time-frequency resource) of the cell to communicate with the source base station 200 and the target base station 300. The cell may be a macro cell, or may be a small cell (small cell). Optionally, the small cell may include a metro cell (metro cell), a micro cell (micro cell), a pico cell (pico cell), a femto cell (femto cell), or the like. Specific technologies and specific device forms used by the source base station 200 and the target base station 300 are not limited in this embodiment of this application.

The terminal device 100 is also referred to as user equipment (user equipment, UE), a mobile station (mobile station, MS), a mobile terminal (mobile terminal, MT), or the like, and is a device that provides a user with voice and/or data connectivity, for example, a handheld device or a vehicle-mounted device with a wireless connection function. Currently, for example, the terminal device is a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), or a wireless terminal in a smart home (smart home).

The following describes a procedure of an existing handover method. FIG. 2 is a message exchange diagram of an existing handover method. As shown in FIG. 2, an execution body relates to a terminal device, a source base station, and a target base station. The handover method may include:
S201. The source base station sends a radio resource control (radio resource control, RRC) reconfiguration message to the terminal device.

Correspondingly, the terminal device receives the RRC reconfiguration message sent by the source base station.

The terminal device is currently in a coverage area of a source cell of the source base station. The terminal device is in a connected state. The terminal device may perform signal measurement based on the RRC reconfiguration message. Optionally, the RRC reconfiguration message may include but is not limited to parameters such as a measurement object, a report configuration, and a measurement identifier.

S202. The terminal device sends a measure report (Measure Report) to the source base station.

Correspondingly, the source base station receives the measure report sent by the terminal device.

The terminal device may generate a measure report after measuring a cell based on the RRC reconfiguration message. The cell may be a cell indicated in the RRC reconfiguration message or a cell determined based on the RRC reconfiguration message. For example, the cell may include but is not limited to an intra-frequency neighboring cell and an inter-frequency neighboring cell of the source cell currently accessed by the terminal device. The terminal device may report various events to the source base station by using the measure report. Optionally, the measure report may include but is not limited to an intra-frequency measure report and an inter-frequency measure report. An occasion on which the terminal device reports the measure report is not limited in this application. For example, the terminal device sends the measure report to the source base station when signal strength of the source cell currently accessed by the terminal device is less than a first preset threshold and signal strength of a target cell is greater than a second preset threshold. Specific values of the first preset threshold and the second preset threshold are not limited.

S203. The source base station performs handover decision, to determine whether the terminal device needs to be handed over.

Specifically, after receiving the measure report reported by the terminal device, the source base station determines, based on the measure report, whether the terminal device needs to be handed over. If it is determined that the terminal device needs to be handed over, S204 continues to be performed.

S204. The source base station sends a handover request (Handover Request) message to the target base station.

Correspondingly, the target base station receives the handover request message sent by the source base station.

S205. The target base station performs admission control (admission control).

Specifically, the target base station determines, based on a parameter such as a quantity of connections of the target base station, whether to allow access of the terminal device. If the access of the terminal device is allowed, S206 continues to be performed.

S206. The target base station sends a handover request ACK (Handover Request ACK) message to the source base station.

Correspondingly, the source base station receives the handover request ACK message sent by the target base station.

Optionally, the handover request ACK message may include but is not limited to parameters such as a new cell radio network temporary identity (cell radio network temporary identity, C-RNTI) and a security algorithm of the target base station.

S207. The source base station sends an RRC reconfiguration message to the terminal device.

Correspondingly, the terminal device receives the RRC reconfiguration message sent by the source base station.

In this step, the RRC reconfiguration message may also be referred to as a handover command (Handover Command) message. The RRC reconfiguration message may include all or a part of content in the handover request ACK message in S206. Optionally, the RRC reconfiguration message may include but is not limited to parameters such as the new C-RNTI and the security algorithm of the target base station.

S208. The terminal device initiates random access (random access) to the target base station.

S209. The terminal device sends an RRC reconfiguration complete (RRC Reconfiguration Complete) message to the target base station.

Specifically, after the terminal device accesses the target cell of the target base station, the terminal device sends the RRC reconfiguration complete message to the target base station, to complete handover from the source base station to the target base station.

In the foregoing handover process, to implement non-interruption of a signal, the terminal device may be simultaneously connected to the source base station and the target base station in the handover process, and is disconnected from the source base station after the terminal device successfully accesses the target cell of the target base station. However, when the source cell and the target cell are intra-frequency neighboring cells, if the terminal device is simultaneously connected to the source base station and the target base station, very severe co-channel interference is generated, and communication quality is degraded.

In view of this, an embodiment of this application provides a handover method, which may be applied to an intra-frequency handover scenario in which a source cell and a target cell are intra-frequency neighboring cells. A terminal device, a source base station, and a target base station obtain first indication information, where the first indication information may indicate a time during which the terminal device separately transmits data with the source base station and the target base station when the terminal device is handed over from a source cell of the source base station to a target cell of the target base station. In this way, at any time in an intra-frequency handover process, the terminal device may transmit data with the source base station or the target base station, so that co-channel interference caused when the terminal device simultaneously transmits data with the source base station and the target base station is avoided, and uninterrupted signal transmission is ensured in the handover process, thereby improving communication quality of intra-frequency handover.

The following provides descriptions with reference to the accompanying drawings.

Terms "first", "second", "third", "fourth", and the like (if any) in this application are used to distinguish similar objects, and are not necessarily used to describe a specific order or sequence. It should be understood that data used in such a way are interchangeable in proper circumstances.

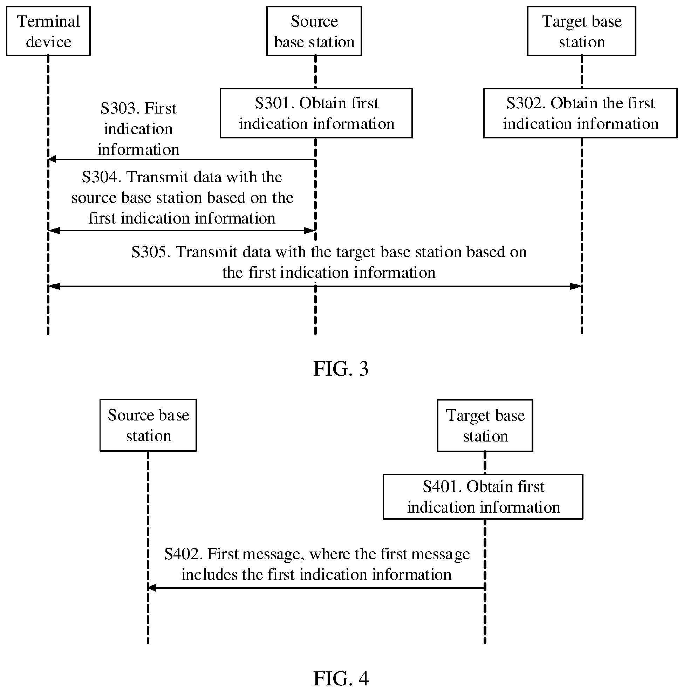

FIG. 3 is a message exchange diagram of a handover method according to an embodiment of this application. An execution body of the handover method provided in this embodiment may include a terminal device, a source base station, and a target base station. As shown in FIG. 3, the handover method provided in this embodiment may include:
S301. The source base station obtains first indication information.
S302. The target base station obtains the first indication information.

The first indication information indicates a time during which the terminal device separately transmits data with the source base station and the target base station when the terminal device is handed over from a first cell of the source base station to a second cell of the target base station. The first cell and the second cell are intra-frequency neighboring cells.

S303. The source base station sends the first indication information to the terminal device.

Correspondingly, the terminal device receives the first indication information sent by the source base station.

S304. The terminal device transmits data with the source base station based on the first indication information.

S305. The terminal device transmits data with the target base station based on the first indication information.

An execution sequence of S301 and S302 is not limited in this embodiment. For example, S301 may be performed before S302, or may be performed after S302. An execution sequence of S304 and S305 is not limited in this embodiment.

Specifically, an application scenario of the handover method provided in this embodiment is a scenario in which the terminal device is handed over from the first cell of the source base station to the second cell of the target base station, and is an intra-frequency handover scenario. The source base station, the target base station, and the terminal device all need to obtain the first indication information. The first indication information may indicate the time during which the terminal device separately transmits data with the source base station and the target base station in an intra-frequency handover process of the terminal device. The source base station may know, by obtaining the first indication information, a time during which the source base station transmits data with the terminal device, to transmit data with the terminal device within the time. The target base station may know, by obtaining the first indication information, a time during which the target base station transmits data with the terminal device, to transmit data with the terminal device within the time. The terminal device receives the first indication information sent by the source base station. The terminal device may know, by using the first indication information, a time to transmit data with the source base station and a time to transmit data with the target base station in the intra-frequency handover process.

It may be learned that, in the handover method provided in this embodiment, the source base station, the target base station, and the terminal device all obtain the first indication information. In the intra-frequency handover process, the terminal device transmits data with one of the source base station and the target base station at any time, thereby avoiding co-channel interference caused when the terminal device simultaneously transmits data with the source base station and the target base station, ensuring uninterrupted signal transmission in the intra-frequency handover process, and improving communication quality of intra-frequency handover.

Optionally, the transmitted data may include at least one of sent data and received data. For example, that the terminal device transmits data with the source base station is used as an example. Within a time during which the terminal device transmits data with the source base station, the terminal device may send data to the source base station, and correspondingly, the source base station may receive the data sent by the terminal device. The source base station may also send data to the terminal device, and correspondingly, the terminal device receives the data sent by the source base station.

It should be noted that names of the first indication information, the first cell, and the second cell are not limited in this embodiment. For example, the first indication information may also be referred to as time division multiplexing (time division multiplexing, TDM) information. The first cell may also be referred to as a source cell, and the second cell may also be referred to as a target cell.

Optionally, the first cell may be a time division duplex (time division duplex, TDD) cell or a frequency division duplex (frequency division duplex, FDD) cell. Optionally, the second cell may be a TDD cell or an FDD cell.

Optionally, a system time of the first cell may be the same as or different from a system time of the second cell. An application scenario in which the system time of the first cell is the same as the system time of the second cell may be referred to as a synchronous scenario. An application scenario in which the system time of the first cell is different from the system time of the second cell may be referred to as an asynchronous scenario.

An implementation in which the source base station and the target base station obtain the first indication information is not limited in this embodiment.

Optionally, the first indication information may be information preset and stored in the source base station and the target base station. Optionally, the first indication information may be periodically updated. A manner of obtaining the first indication information is simplified by presetting the first indication information.

Optionally, a plurality of pieces of indication information may be prestored in the source base station and the target base station. The source base station and the target base station may obtain the first indication information from the plurality of pieces of indication information based on a preset rule. The preset rule may be related to a data transmission time, a quantity of connected terminal devices, system load, channel quality, and the like. The plurality of pieces of indication information are preset, and the first indication information is obtained based on a specific rule, so that the first indication information more conforms to the application scenario, and communication quality of intra-frequency handover is improved.

Optionally, the source base station and the target base station may obtain the first indication information through negotiation. Optionally, the source base station may initiate a negotiation request to the target base station. Optionally, the target base station may initiate a negotiation request to the source base station. The negotiation request may be any message between the source base station and the target base station, for example, an RRC message. The first indication information is obtained through negotiation between the source base station and the target base station, so that conformity between the first indication information and the application scenario is further improved, and communication quality of intra-frequency handover is improved.

Optionally, in S303, that the terminal device receives the first indication information sent by the source base station may include:
The terminal device receives a third message sent by the source base station, where the third message includes the first indication information.

The third message may be any message sent by the source base station to the terminal device, for example, an RRC message. A name of the third message is not limited in this embodiment. Optionally, the third message may be the RRC reconfiguration message in S207 in FIG. 2. The third message may also be referred to as a handover command message. It should be noted that, to make messages in the embodiments of this application more easily distinguished and have clear meanings, a message that is sent by the source base station to the terminal device and that carries the first indication information is referred to as the third message.

This embodiment provides the handover method, including: The source base station and the target base station obtain the first indication information, the source base station sends the first indication information to the terminal device, and the terminal device separately transmits data with the source base station and the target base station based on the first indication information. The first indication information indicates the time during which the terminal device separately transmits data with the source base station and the target base station when the terminal device is handed over from the first cell of the source base station to the second cell of the target base station. The first cell and the second cell are intra-frequency neighboring cells. According to the handover method provided in this embodiment, in the intra-frequency handover process, the terminal device transmits data with one of the source base station and the target base station at any time by using the first indication information, thereby avoiding co-channel interference, ensuring uninterrupted signal transmission in the intra-frequency handover process, and improving communication quality of intra-frequency handover.

The following describes, by using embodiments shown in FIG. 4 to FIG. 6, the implementation in which the source base station and the target base station obtain the first indication information in S301 and S302.

It should be noted that, in the embodiments shown in FIG. 4 to FIG. 6, a message that carries indication information and that is sent by the target base station to the source base station may be referred to as a first message, and a message that carries indication information and that is sent by the source base station to the target base station may be referred to as a second message. In different embodiments, content included in the first message and the second message may be different.

It should be noted that a name, a message type, and included content of the first message and a manner in which the indication information in the first message is carried, and a name, a message type, and included content of the second message and a manner in which the indication information in the second message is carried are not limited in the embodiments of this application.

In another embodiment of this application, the first indication information is determined by the target base station, and is sent by the target base station to the source base station. Correspondingly, the source base station receives the first indication information sent by the target base station. FIG. 4 is another message exchange diagram of a handover method according to an embodiment of this application. In this embodiment, S301 may be S402, and S302 may be S401.

As shown in FIG. 4, the handover method provided in this embodiment may include:
S401. The target base station obtains first indication information.
S402. The target base station sends a first message to the source base station, where the first message includes the first indication information.

Correspondingly, the source base station receives the first message sent by the target base station.

It may be learned that, in this embodiment, the target base station may determine the first indication information. The target base station sends the first indication information to the source base station, so that the source base station may obtain the first indication information. Subsequently, the source base station may send the first indication information to the terminal device. In this way, the source base station, the target base station, and the terminal device all obtain the first indication information. The source base station, the target base station, and the terminal device perform corresponding data transmission by using a time indicated by the first indication information, thereby avoiding co-channel interference, and improving communication quality of intra-frequency handover.

Optionally, the first message may be an RRC message sent by the target base station to the source base station.

The following describes an example of the first message with reference to FIG. 2. In this example, the first message may be the handover request ACK (Handover Request ACK) message in S206 in FIG. 2.

According to a communication protocol TS 38.423, the handover request ACK message has a preset structure. The handover request ACK message includes an information element "Target NG-RAN node To Source NG-RAN node Transparent Container" (Target NG-RAN node To Source NG-RAN node Transparent Container). The information element is transparently transmitted for the source base station. That is, after receiving the handover request ACK message sent by the target base station, the source base station does not parse the information element, but directly sends the information element as a third message or as a part of the third message to the terminal device. Optionally, both a first part and a second part in the first message include the first indication information. The first part is a part on which the source base station performs parsing, and the second part is a part on which the source base station does not perform parsing. For example, the first part in the first message may be a part other than the information element "Target NG-RAN node To Source NG-RAN node Transparent Container" in the handover request ACK message. The second part in the first message may be the information element "Target NG-RAN node To Source NG-RAN node Transparent Container" in the handover request ACK message.

Both the first part and the second part in the first message carry the first indication information. After receiving the first message, the source base station may parse the first part, to obtain the first indication information. In addition, the source base station may directly send the second part to the terminal device. The method is simple and easy to implement.

Optionally, the second cell is a TDD cell, and the first cell is a TDD cell or an FDD cell. Optionally, the second cell is an FDD cell, and the first cell is an FDD cell.

Generally, for an FDD mode, there may be two independent channels, where one is used to receive downlink data, and the other is used to send uplink data. There is a guard band between the two channels to prevent mutual interference. For a TDD mode, receiving downlink data and sending uplink data are generally performed in different timeslots of a same frequency channel, and the timeslots are separated by using a specific guard time. Therefore, when a cell in the TDD mode performs data transmission, allocation of TDD uplink and downlink timeslots needs to be considered to avoid interference. Therefore, the first indication information may be preferentially determined by a base station corresponding to the TDD cell. When there is only one TDD cell in the first cell and the second cell, the first indication information may be determined by the TDD cell. When both the first cell and the second cell are TDD cells or FDD cells, the first indication information may be determined by a base station corresponding to any cell.

In the handover method provided in this embodiment, the first indication information is determined by the target base station. The target base station sends the first indication information to the source base station, so that the source base station may obtain the first indication information. Subsequently, the source base station may send the first indication information to the terminal device. The source base station, the target base station, and the terminal device perform corresponding data transmission by using the time indicated by the first indication information, thereby avoiding co-channel interference, and improving communication quality of intra-frequency handover.

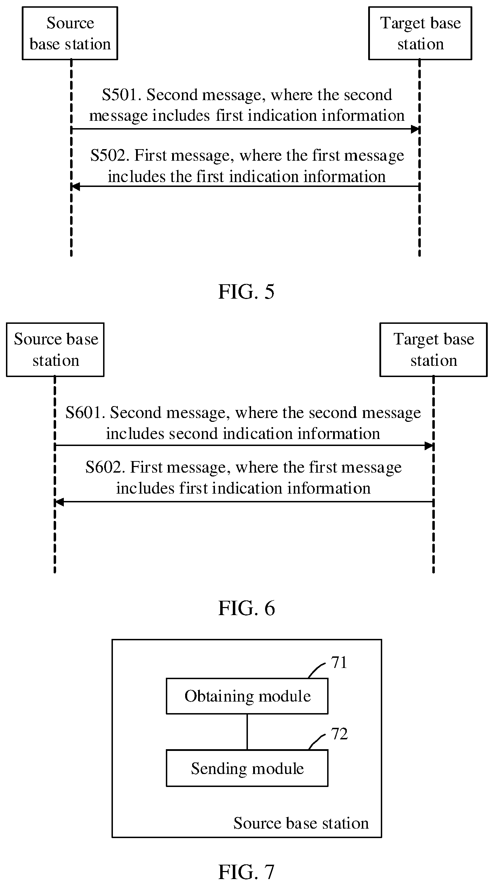

In still another embodiment of this application, the first indication information is determined by the source base station, and is sent by the source base station to the target base station. Therefore, the target base station may obtain the first indication information. FIG. 5 is still another message exchange diagram of a handover method according to an embodiment of this application. In this embodiment, S301 may include S502, and S302 may include S501.

As shown in FIG. 5, the handover method provided in this embodiment may include:
S501. The source base station sends a second message to the target base station, where the second message includes first indication information.

Correspondingly, the target base station receives the second message sent by the source base station.

S502. The target base station sends a first message to the source base station, where the first message includes the first indication information.

Correspondingly, the source base station receives the first message sent by the target base station.

Specifically, the source base station may determine the first indication information. The source base station sends the first indication information to the target base station, so that the target base station may obtain the first indication information. The target base station sends the first message to the source base station, where the first message includes the first indication information, and is used to indicate that the target base station obtains the first indication information. Subsequently, the source base station may send the first indication information to the terminal device. In this way, the source base station, the target base station, and the terminal device all obtain the first indication information. The source base station, the target base station, and the terminal device perform corresponding data transmission by using a time indicated by the first indication information, thereby avoiding co-channel interference, and improving communication quality of intra-frequency handover.

Optionally, the second message may be an RRC message sent by the target base station to the source base station. For example, the second message may be a handover request (Handover Request) message in S204 in FIG. 2.

Optionally, the first message may be an RRC message sent by the target base station to the source base station. For example, the first message may be the handover request ACK (Handover Request ACK) message in S206 in FIG. 2. For a description of the handover request ACK message, refer to the embodiment shown in FIG. 4. Details are not described herein.

Optionally, in an implementation, a second part in the first message includes the first indication information. The second part is a part on which the source base station does not perform parsing. For example, the second part in the first message may be an information element "Target NG-RAN node To Source NG-RAN node Transparent Container" in the handover request ACK message.

The second part in the first message carries the first indication information. After receiving the first message, the source base station does not obtain the first indication information by parsing the first message, so that the source base station may implicitly determine that the target base station obtains the first indication information. The source base station may directly send the second part to the terminal device. The method is simple and easy to implement.

Optionally, in another implementation, both a first part and the second part in the first message include the first indication information. The first part is a part on which the source base station performs parsing. For example, the first part in the first message may be a part other than the information element "Target NG-RAN node To Source NG-RAN node Transparent Container" in the handover request ACK message.

Both the first part and the second part in the first message carry the first indication information. After receiving the first message, the source base station may parse the first part, to obtain the first indication information. The source base station may determine that the target base station obtains the first indication information. In addition, the source base station may directly send the second part to the terminal device. The method is simple and easy to implement.

Optionally, the first cell is a TDD cell, and the second cell is a TDD cell or an FDD cell. Optionally, the first cell is an FDD cell, and the second cell is an FDD cell.

In the handover method provided in this embodiment, the first indication information is determined by the source base station. The source base station sends the first indication information to the target base station, so that the target base station may obtain the first indication information. The target base station then sends the first indication information to the source base station, to indicate that the target base station obtains the first indication information. Subsequently, the source base station may send the first indication information to the terminal device. The source base station, the target base station, and the terminal device perform corresponding data transmission by using the time indicated by the first indication information, thereby avoiding co-channel interference, and improving communication quality of intra-frequency handover.

In still another embodiment of this application, the source base station may send indication information determined by the source base station to the target base station. The target base station finally determines first indication information based on the indication information sent by the source base station, and sends the first indication information to the source base station. Correspondingly, the source base station receives the first indication information sent by the target base station. FIG. 6 is still another message exchange diagram of a handover method according to an embodiment of this application. In this embodiment, S301 may include S602, and S302 may include S601 and S602.

As shown in FIG. 6, the handover method provided in this embodiment may include:
S601. The source base station sends a second message to the target base station, where the second message includes second indication information.

The second indication information is determined by the source base station to indicate a time during which the terminal device separately transmits data with the source base station and the target base station when the terminal device is handed over from the first cell of the source base station to the second cell of the target base station.

Correspondingly, the target base station receives the second message sent by the source base station.

S602. The target base station sends a first message to the source base station, where the first message includes first indication information.

The second indication information is different from the first indication information.

Correspondingly, the source base station receives the first message sent by the target base station.

Specifically, the source base station may first determine the second indication information, and send the second indication information to the target base station. Based on the second indication information determined by the source base station, the target base station may determine, with reference to another condition, whether to use the second indication information. When determining not to use the second indication information, the target base station may determine the first indication information. The target base station sends the first indication information to the source base station, so that the source base station may obtain the finally determined first indication information. Subsequently, the source base station may send the first indication information to the terminal device. In this way, the source base station, the target base station, and the terminal device all obtain the first indication information. The source base station, the target base station, and the terminal device perform corresponding data transmission by using a time indicated by the first indication information, thereby avoiding co-channel interference, and improving communication quality of intra-frequency handover.

For the first message, refer to the first message in the embodiment shown in FIG. 4. A principle is similar, and details are not described herein.

Optionally, the first cell is a TDD cell, and the second cell is a TDD cell or an FDD cell. Optionally, the first cell is an FDD cell, and the second cell is an FDD cell.

In the handover method provided in this embodiment, the source base station first determines the second indication information, and sends the second indication information to the target base station. The target base station finally determines the first indication information based on the second indication information, and sends the first indication information to the source base station, so that the source base station may obtain the first indication information. Subsequently, the source base station may send the first indication information to the terminal device. The source base station, the target base station, and the terminal device perform corresponding data transmission by using the time indicated by the first indication information, thereby avoiding co-channel interference, and improving communication quality of intra-frequency handover.

The following describes indication information in this application by using an embodiment. The indication information may be first indication information or second indication information.

Optionally, in an implementation, the indication information may include an index value. There is a correspondence between the index value and a time for separately transmitting data by using a source base station and a target base station when a terminal device is handed over from a first cell to a second cell.

In this implementation, the source base station and the target base station may prestore the correspondence between the index value and the time for separately transmitting data by using the source base station and the target base station when the terminal device is handed over from the first cell to the second cell. The correspondence is searched by using the index value included in the indication information, to determine the time during which the terminal device separately transmits data with the source base station and the target base station.

The following uses an example for description. Table 1 shows a correspondence between an index value and a data transmission time. Table 1 includes four index values, which are respectively 1 to 4. Each index value corresponds to a transmission time.

For example, the first indication information includes an index value 2. It may be determined that the source base station and the target base station agree that 40 ms is used as a period. The first 20 ms is used for data transmission between the terminal device and the source base station. It is implicitly determined that the last 20 ms is used for data transmission between the terminal device and the target base station.

It should be noted that the example shown in Table 1 is merely an example for description, and imposes no limitation on the first indication information, the index value, and the correspondence between an index value and a data transmission time.

**Table 1**

| Index value | Data transmission time |
|---|---|
| 1 | 40 ms is used as a period, and the first 20 ms is used for data transmission between the terminal device and the source base station. |
| 2 | 40 ms is used as a period, and the first 20 ms is used for data transmission between the terminal device and the target base station. |
| 3 | A system frame is used as a division line, and an even frame number is used for data transmission between the terminal device and the source base station. |
| 4 | A system frame is used as a division line, and an even frame number is used for data transmission between the terminal device and the target base station. |

Optionally, in another implementation, the indication information may include a first value. The first value is used to indicate a time, in a preset period, for transmitting data by using the source base station when the terminal device is handed over from the first cell to the second cell.

An example is used for description. It is assumed that the preset period is 40 ms, that is, the target base station and the source base station agree that 40 ms is used as a period. The first indication information includes a first value 16. The first value 16 may indicate that in the 40 ms, the first 16 ms is used for data transmission between the terminal device and the source base station.

It should be noted that a specific value of the first value, a specific value of the preset period, and a location, in the preset period, of the time indicated by the first value to transmit data by using the source base station are not limited in this embodiment.

Optionally, in still another implementation, the indication information may include a second value. The second value is used to indicate a time, in a preset period, for transmitting data by using the target base station when the terminal device is handed over from the first cell to the second cell.

An example is used for description. It is assumed that the preset period is 40 ms, that is, the target base station and the source base station agree that 40 ms is used as a period. The first indication information includes a second value 20. The second value 20 may indicate that in the 40 ms, the last 20 ms is used for data transmission between the terminal device and the target base station.

It should be noted that a specific value of the second value, a specific value of the preset period, and a location, in the preset period, of the time indicated by the second value to transmit data by using the target base station are not limited in this embodiment.

Optionally, in still another implementation, the indication information may include N indicator fields, where N is an integer greater than 1. Each indicator field corresponds to a unit time in a preset period, and the indicator field is used to indicate that, in the unit time corresponding to the indicator field, the terminal device transmits data by using the source base station or the target base station when the terminal device is handed over from the first cell to the second cell.

An example is used for description. It is assumed that the preset period is 10 ms, and N is equal to 10, that is, the target base station and the source base station agree that 10 ms is used as a period. It is assumed that the first indication information includes 10 indicator fields with a value of 1111110000, which may indicate that in the 10 ms, the first 6 ms is used for data transmission between the terminal device and the source base station, and the last 4 ms is used for data transmission between the terminal device and the target base station.

It should be noted that a specific value of N, a specific value of the preset period, and a specific value of each indicator field are not limited in this embodiment.

Optionally, the indication information may further indicate whether the data transmission time has been adjusted based on a system time difference between the source base station and the target base station.

Specifically, in an asynchronous scenario, a system time of the first cell of the source base station is different from a system time of the second cell of the target base station, and there is a system time difference. The indication information may further indicate whether the system time difference is referenced for the time during which the terminal device separately transmits data with the source base station and the target base station when the terminal device is handed over from the first cell of the source base station to the second cell of the target base station. In this way, the source base station, the target base station, and the terminal device may determine whether the data transmission time further needs to be adjusted based on the system time difference, thereby improving accuracy of determining the transmission time.

Optionally, the indication information may include first identification information, and a value of the first identification information may indicate whether the data transmission time has been adjusted based on a system time difference between the source base station and the target base station.

A quantity of bits occupied by the first identification information and the value of the first identification information are not limited in this embodiment. For example, the first identification information has one bit. When the first identification information is 1, the first identification information indicates that the data transmission time has been adjusted based on the system time difference between the source base station and the target base station. For another example, when the first identification information is 0, the first identification information indicates that the data transmission time has been adjusted based on the system time difference between the source base station and the target base station.

Optionally, the indication information may further indicate that the data transmission time is based on a system time of the source base station or a system time of the target base station.

Specifically, in an asynchronous scenario, a system time of the first cell of the source base station is different from a system time of the second cell of the target base station. The indication information may further indicate that the time during which the terminal device separately transmits data with the source base station and the target base station when the terminal device is handed over from the first cell of the source base station to the second cell of the target base station is based on the system time of the source base station or the system time of the target base station. In this way, the source base station, the target base station, and the terminal device may determine the data transmission time based on the system time of the source base station or the system time of the target base station, thereby improving accuracy of determining the transmission time.

Optionally, the indication information may include second identification information, and a value of the second identification information may indicate that the data transmission time is based on a system time of the source base station or a system time of the target base station.

A quantity of bits occupied by the second identification information and the value of the second identification information are not limited in this embodiment. For example, the first identification information has two bits. When the second identification information is 11, the second identification information indicates that the data transmission time is based on the system time of the source base station. For another example, when the first identification information is 10, the second identification information indicates that the data transmission time is based on the system time of the target base station.

FIG. 7 is a schematic diagram of a structure of a source base station according to an embodiment of this application. The source base station provided in this embodiment is configured to perform operations performed by the source base station in the handover method provided in any method embodiment of this application. Technical principles and technical effects are similar. Details are not described herein again. As shown in FIG. 7, the source base station provided in this embodiment may include:
an obtaining module 71, configured to obtain first indication information, where the first indication information indicates a time during which a terminal device separately transmits data with the source base station and a target base station when the terminal device is handed over from a first cell of the source base station to a second cell of the target base station, and the first cell and the second cell are intra-frequency neighboring cells; and
a sending module 72, configured to send the first indication information to the terminal device.

Optionally, the obtaining module 71 is specifically configured to receive the first indication information sent by the target base station.

Optionally, the obtaining module 71 is specifically configured to receive a first message sent by the target base station, where the first message includes the first indication information.

Optionally, the sending module 72 is further configured to send a second message to the target base station, where the second message includes the first indication information.

Optionally, the sending module 72 is further configured to send, by the source base station, a second message to the target base station, where the second message includes second indication information, the second indication information is determined by the source base station to indicate a time during which the terminal device separately transmits data with the source base station and the target base station when the terminal device is handed over from the first cell of the source base station to the second cell of the target base station, and the second indication information is different from the first indication information.

Optionally, the first indication information further indicates whether the data transmission time has been adjusted based on a system time difference between the source base station and the target base station.

Optionally, the first indication information further indicates that the data transmission time is based on a system time of the source base station or a system time of the target base station.

Optionally, the first indication information includes at least one of the following:
an index value, where there is a correspondence between the index value and a time for separately transmitting data by using the source base station and the target base station when the terminal device is handed over from the first cell to the second cell;
a first value, where the first value is used to indicate a time, in a preset period, for transmitting data by using the source base station when the terminal device is handed over from the first cell to the second cell;
a second value, where the second value is used to indicate a time, in the preset period, for transmitting data by using the target base station when the terminal device is handed over from the first cell to the second cell; and
N indicator fields, where N is an integer greater than 1, each indicator field corresponds to a unit time in the preset period, and the indicator field is used to indicate that, in the unit time corresponding to the indicator field, the terminal device transmits data by using the source base station or the target base station when the terminal device is handed over from the first cell to the second cell.

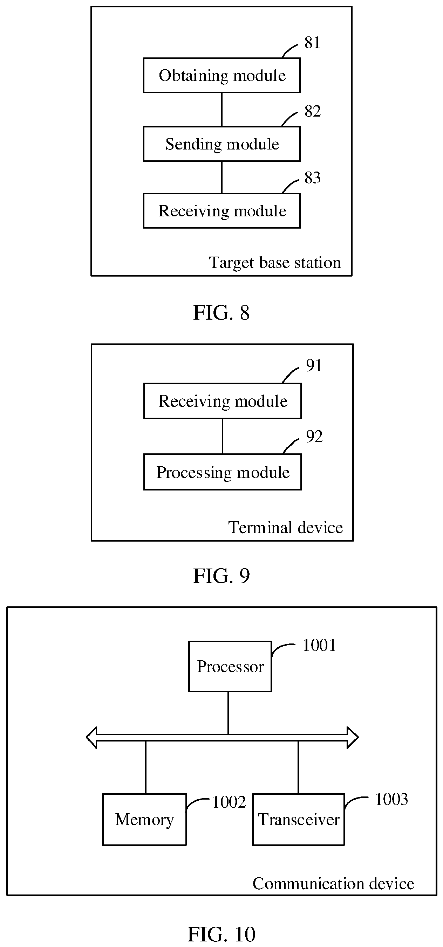

FIG. 8 is a schematic diagram of a structure of a target base station according to an embodiment of this application. The target base station provided in this embodiment is configured to perform operations performed by the target base station in the handover method provided in any method embodiment of this application. Technical principles and technical effects are similar. Details are not described herein again. As shown in FIG. 8, the target base station provided in this embodiment may include:
an obtaining module 81, configured to obtain first indication information, where the first indication information indicates a time during which a terminal device separately transmits data with a source base station and the target base station when the terminal device is handed over from a first cell of the source base station to a second cell of the target base station, and the first cell and the second cell are intra-frequency neighboring cells.

Optionally, the target base station further includes a sending module 82. The sending module 82 is configured to send the first indication information to the source base station.

Optionally, the sending module 82 is specifically configured to send a first message to the source base station, where the first message includes the first indication information.

Optionally, the obtaining module 81 is specifically configured to receive a second message sent by the source base station, where the second message includes the first indication information.

Optionally, the target base station further includes a receiving module 83. The receiving module 83 is configured to receive a second message sent by the source base station, where the second message includes second indication information, the second indication information is determined by the source base station to indicate a time during which the terminal device separately transmits data with the source base station and the target base station when the terminal device is handed over from the first cell of the source base station to the second cell of the target base station, and the second indication information is different from the first indication information.

Optionally, the first indication information further indicates whether the data transmission time has been adjusted based on a system time difference between the source base station and the target base station.

Optionally, the first indication information further indicates that the data transmission time is based on a system time of the source base station or a system time of the target base station.

Optionally, the first indication information includes at least one of the following:
an index value, where there is a correspondence between the index value and a time for separately transmitting data by using the source base station and the target base station when the terminal device is handed over from the first cell to the second cell;
a first value, where the first value is used to indicate a time, in a preset period, for transmitting data by using the source base station when the terminal device is handed over from the first cell to the second cell;
a second value, where the second value is used to indicate a time, in the preset period, for transmitting data by using the target base station when the terminal device is handed over from the first cell to the second cell; and
N indicator fields, where N is an integer greater than 1, each indicator field corresponds to a unit time in the preset period, and the indicator field is used to indicate that, in the unit time corresponding to the indicator field, the terminal device transmits data by using the source base station or the target base station when the terminal device is handed over from the first cell to the second cell.

FIG. 9 is a schematic diagram of a structure of a terminal device according to an embodiment of this application. The terminal device provided in this embodiment is configured to perform operations performed by the terminal device in the handover method provided in any method embodiment of this application. Technical principles and technical effects are similar. Details are not described herein again. As shown in FIG. 9, the terminal device provided in this embodiment may include:
a receiving module 91, configured to receive first indication information sent by a source base station, where the first indication information indicates a time during which the terminal device separately transmits data with the source base station and a target base station when the terminal device is handed over from a first cell of the source base station to a second cell of the target base station, and the first cell and the second cell are intra-frequency neighboring cells; and
a processing module 92, configured to separately transmit data with the source base station and the target base station based on the first indication information.

Optionally, the first indication information further indicates whether the data transmission time has been adjusted based on a system time difference between the source base station and the target base station.

Optionally, the first indication information further indicates that the data transmission time is based on a system time of the source base station or a system time of the target base station.

It should be understood that division of the foregoing modules is merely logical function division. During actual implementation, all or some of the modules may be integrated into one physical entity, or may be physically separated. In addition, all the modules in the apparatus may be implemented in a form of software invoked by a processing element, or may be implemented in a form of hardware; or some modules may be implemented in a form of software invoked by a processing element, and some modules may be implemented in a form of hardware. For example, each module may be a separately disposed processing element, or may be integrated into a chip of the apparatus for implementation. In addition, each module may alternatively be stored in the memory in a form of a program to be invoked by a processing element of the apparatus to perform a function of the module. In addition, all or some of the modules may be integrated together, or may be implemented independently. The processing element herein may also be referred to as a processor, and may be an integrated circuit having a signal processing capability. In an implementation process, the steps of the foregoing methods or the foregoing modules may be implemented by using a hardware integrated logic circuit in the processing element, or may be implemented in a form of software invoked by the processing element.

In an example, the module in the foregoing apparatus may be one or more integrated circuits configured to perform the foregoing method, such as one or more application-specific integrated circuits (application specific integrated circuits, ASICs), one or more digital signal processors (digital signal processors, DSPs), one or more field programmable gate arrays (field programmable gate arrays, FPGAs), or a combination of at least two of these integrated circuit forms. For another example, when the module in the foregoing apparatus may be implemented by a processing element by scheduling a program, the processing element may be a general purpose processor, for example, a CPU or another processor that may invoke a program. For still another example, these modules may be integrated together, and implemented in a form of a system-on-a-chip (system-on-a-chip, SOC).

In an example, the foregoing module for receiving or sending may be an interface circuit of the foregoing apparatus, and is configured to transmit a signal with another device.

FIG. 10 is a schematic diagram of a structure of a communication device according to an embodiment of this application. The communication device may be a source base station, a target base station, or a terminal device. As shown in FIG. 10, the communication device provided in this embodiment may include a processor 1001, a memory 1002, and a transceiver 1003. The transceiver 1003 is configured to communicate with another device. The memory 1002 is configured to store instructions. The processor 1001 is configured to execute the instructions stored in the memory 1002, so that the communication device performs operations performed by the source base station, the target base station, or the terminal device in the handover method provided in any embodiment of this application. A specific implementation and a technical effect are similar, and details are not described herein.

It should be understood that the processor may be a general-purpose processor, a digital signal processor, an application-specific integrated circuit, a field programmable gate array or another programmable logic device, a discrete gate or a transistor logic device, or a discrete hardware component, and may implement or execute the methods, steps, and logical block diagrams disclosed in the embodiments of this application. The general-purpose processor may be a microprocessor, any conventional processor, or the like. The steps of the methods disclosed with reference to the embodiments of this application may be directly performed and completed by a hardware processor, or may be performed and completed by using a combination of hardware and software modules in the processor.

In the embodiments of this application, the memory may be a nonvolatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can be used to carry or store expected program code in a form of instructions or a data structure and that can be accessed by a computer, but is not limited thereto. The memory in this embodiment of this application may alternatively be a circuit or any other apparatus that can implement a storage function, and is configured to store the program instructions and/or the data.

An embodiment of this application further provides a system for handover, including the source base station and the target base station in the foregoing embodiments.

The source base station and the target base station are configured to obtain first indication information, where the first indication information indicates a time during which a terminal device separately transmits data with the source base station and the target base station when the terminal device is handed over from a first cell of the source base station to a second cell of the target base station, and the first cell and the second cell are intra-frequency neighboring cells.

The source base station is further configured to send the first indication information to the terminal device.

Optionally, the source base station is specifically configured to receive, by the source base station, the first indication information sent by the target base station.

Optionally, the source base station is specifically configured to receive, by the source base station, a first message sent by the target base station, where the first message includes the first indication information.

Optionally, the source base station is further configured to send, by the source base station, a second message to the target base station, where the second message includes the first indication information.

Optionally, the source base station is further configured to send, by the source base station, a second message to the target base station, where the second message includes second indication information, the second indication information is determined by the source base station to indicate a time during which the terminal device separately transmits data with the source base station and the target base station when the terminal device is handed over from the first cell of the source base station to the second cell of the target base station, and the second indication information is different from the first indication information.

Optionally, the target base station is specifically configured to receive, by the target base station, a second message sent by the source base station, where the second message includes the first indication information.

Optionally, the first indication information further indicates whether the data transmission time has been adjusted based on a system time difference between the source base station and the target base station.

Optionally, the first indication information further indicates that the data transmission time is based on a system time of the source base station or a system time of the target base station.

Optionally, the first indication information includes at least one of the following:
an index value, where there is a correspondence between the index value and a time for separately transmitting data by using the source base station and the target base station when the terminal device is handed over from the first cell to the second cell;
a first value, where the first value is used to indicate a time, in a preset period, for transmitting data by using the source base station when the terminal device is handed over from the first cell to the second cell;
a second value, where the second value is used to indicate a time, in the preset period, for transmitting data by using the target base station when the terminal device is handed over from the first cell to the second cell; and
N indicator fields, where N is an integer greater than 1, each indicator field corresponds to a unit time in the preset period, and the indicator field is used to indicate that, in the unit time corresponding to the indicator field, the terminal device transmits data by using the source base station or the target base station when the terminal device is handed over from the first cell to the second cell.

In the system for handover provided in this embodiment, the included source base station is configured to perform operations performed by the source base station in the handover method provided in any method embodiment of this application, and the included target base station is configured to perform operations performed by the target base station in the handover method provided in any method embodiment of this application. A technical principle and a technical effect are similar, and details are not described herein.

It should be noted that names of the source base station and the target base station are not limited in this embodiment, and may be different in different communication systems.

## Claims

1. A handover method, comprising:
obtaining (S401), by a target base station (300), first indication information,
receiving (S402), by a source base station (200), a first message sent by the target base station (300), wherein both a first part and a second part in the first message include the first indication information, wherein the first part is a part on which the source base station (200) performs parsing, and the second part is a part on which the source base station (200) does not perform parsing, and wherein the first indication information indicates a time during which a terminal device (100) separately transmits data with the source base station (200) and the target base station (300) when the terminal device (100) is handed over from a first cell of the source base station (200) to a second cell of the target base station (300), and the first cell and the second cell are intra-frequency neighboring cells;
wherein after receiving (S402) the first message sent by the target base station (300), the source base station (200) does not parse the second part including the first indication information, but directly sends (S303) the second part including the first indication information to the terminal device (100).

2. The method according to claim 1, wherein before the receiving, by the source base station, a first message sent by the target base station, the method further comprises:
sending (S501), by the source base station, a second message to the target base station, wherein the second message comprises the first indication information.

3. The method according to claim 1, wherein before the receiving, by the source base station, a first message sent by the target base station, the method further comprises:
sending (S601), by the source base station, a second message to the target base station, wherein the second message comprises second indication information, the second indication information is determined by the source base station to indicate a time during which the terminal device separately transmits data with the source base station and the target base station when the terminal device is handed over from the first cell of the source base station to the second cell of the target base station, and the second indication information is different from the first indication information.

4. The method according to claim 1, wherein the obtaining, by a target base station, first indication information comprises:
receiving (S501), by the target base station, a second message sent by the source base station, wherein the second message comprises the first indication information.

5. The method according to any one of claims 1 to 4, wherein the first indication information further indicates whether the data transmission time has been adjusted based on a system time difference between the source base station and the target base station.

6. The method according to any one of claims 1 to 4, wherein the first indication information further indicates that the data transmission time is based on a system time of the source base station or a system time of the target base station.

7. The method according to any one of claims 1 to 4, wherein the first indication information comprises at least one of the following:
an index value, wherein there is a correspondence between the index value and a time for separately transmitting data by using the source base station and the target base station when the terminal device is handed over from the first cell to the second cell;
a first value, wherein the first value is used to indicate a time, in a preset period, for transmitting data by using the source base station when the terminal device is handed over from the first cell to the second cell;
a second value, wherein the second value is used to indicate a time, in the preset period, for transmitting data by using the target base station when the terminal device is handed over from the first cell to the second cell; and
N indicator fields, wherein N is an integer greater than 1, each indicator field corresponds to a unit time in the preset period, and the indicator field is used to indicate that, in the unit time corresponding to the indicator field, the terminal device transmits data by using the source base station or the target base station when the terminal device is handed over from the first cell to the second cell.

8. A system for handover, comprising a source base station (200) and a target base station (300);
the target base station (300) is configured to obtain first indication information, the source base station (200) is configured to receive a first message sent by the target base station (300), wherein both a first part and a second part in the first message include the first indication information, wherein the first part is a part on which the source base station (200) is configured to perform parsing, and the second part is a part on which the source base station (200) is configured not to perform parsing, and wherein the first indication information indicates a time during which a terminal device (100) separately transmits data with the source base station (200) and the target base station (300) when the terminal device (100) is handed over from a first cell of the source base station (200) to a second cell of the target base station (300), and the first cell and the second cell are intra-frequency neighboring cells; and
the source base station (200) is further configured to, after receiving the first message sent by the target base station (300), not parse the second part including the first indication information, but directly send the second part including the first indication information to the terminal device (100).

## Patentansprüche

1. Weiterreichungsverfahren, umfassend:
Erlangen (S401) von ersten Angabeinformationen durch eine Ziel-Basisstation (300),
Empfangen (S402) einer ersten Nachricht, die durch die Ziel-Basisstation (300) gesendet wird, durch eine Quellen-Basisstation (200), wobei sowohl ein erster Teil als auch ein zweiter Teil in der ersten Nachricht die ersten Angabeinformationen beinhalten, wobei der erste Teil ein Teil ist, auf dem die Quell-Basisstation (200) Analyse durchführt, und der zweite Teil ein Teil ist, auf dem die Quell-Basisstation (200) keine Analyse durchführt, und wobei die ersten Angabeinformationen eine Zeit angeben, während der ein Endgerät (100) getrennt Daten mit der Quell-Basisstation (200) und der Ziel-Basisstation (300) überträgt, wenn das Endgerät (100) von einer ersten Zelle der Quell-Basisstation (200) an eine zweite Zelle der Ziel-Basisstation (300) weitergereicht wird, und die erste Zelle und die zweite Zelle benachbarte Zellen derselben Frequenz sind;
wobei nach dem Empfangen (S402) der ersten Nachricht, die durch die Ziel-Basisstation (300) gesendet wurde, die Quell-Basisstation (200) den zweiten Teil, der die ersten Angabeinformationen beinhaltet, nicht analysiert, sondern den zweiten Teil, der die ersten Angabeinformationen beinhaltet, direkt an das Endgerät (100) sendet (S303).

2. Verfahren nach Anspruch 1, wobei vor dem Empfangen einer ersten Nachricht, die von der Ziel-Basisstation gesendet wurde, durch die Quell-Basisstation das Verfahren ferner Folgendes umfasst:
Senden (S501) einer zweiten Nachricht durch die Quell-Basisstation an die Ziel-Basisstation, wobei die zweite Nachricht die ersten Angabeinformationen umfasst.

3. Verfahren nach Anspruch 1, wobei vor dem Empfangen einer ersten Nachricht, die von der Ziel-Basisstation gesendet wurde, durch die Quell-Basisstation das Verfahren ferner Folgendes umfasst:
Senden (S601) einer zweiten Nachricht durch die Quell-Basisstation an die Ziel-Basisstation, wobei die zweite Nachricht zweite Angabeinformationen umfasst, wobei die zweiten Angabeinformationen durch die Quell-Basisstation bestimmt werden, um eine Zeit anzugeben, während der das Endgerät separat Daten mit der Quell-Basisstation und der Ziel-Basisstation überträgt, wenn das Endgerät von der ersten Zelle der Quell-Basisstation an die zweite Zelle der Ziel-Basisstation weitergereicht wird und sich die zweite Angabeinformationen von der ersten Angabeinformationen unterscheidet.

4. Verfahren nach Anspruch 1, wobei das Erlangen von ersten Angabeinformationen durch eine Ziel-Basisstation Folgendes umfasst:
Empfangen (S501) einer zweiten Nachricht, die durch die Quell-Basisstation gesendet wurde, durch die Ziel-Basisstation, wobei die zweite Nachricht die ersten Angabeinformationen umfasst.

5. Verfahren nach einem der Ansprüche 1 bis 4, wobei die ersten Angabeinformationen ferner angeben, ob die Datenübertragungszeit basierend auf einer Systemzeitdifferenz zwischen der Quell-Basisstation und der Ziel-Basisstation angepasst wurde.

6. Verfahren nach einem der Ansprüche 1 bis 4, wobei die ersten Angabeinformationen ferner angeben, dass die Datenübertragungszeit auf einer Systemzeit der Quell-Basisstation oder einer Systemzeit der Ziel-Basisstation basiert.

7. Verfahren nach einem der Ansprüche 1 bis 4, wobei die ersten Angabeinformationen mindestens eines von Folgendem umfassen:
einen Indexwert, wobei es eine Entsprechung zwischen dem Indexwert und einer Zeit zum separaten Übertragen von Daten unter Verwendung der Quell-Basisstation und der Ziel-Basisstation gibt, wenn das Endgerät von der ersten Zelle an die zweite Zelle weitergereicht wird;
einen ersten Wert, wobei der erste Wert verwendet wird, um eine Zeit in einem voreingestellten Zeitraum zum Übertragen von Daten unter Verwendung der Quell-Basisstation anzugeben, wenn das Endgerät von der ersten Zelle an die zweite Zelle weitergereicht wird;
einen zweiten Wert, wobei der zweite Wert verwendet wird, um eine Zeit in dem voreingestellten Zeitraum zum Übertragen von Daten unter Verwendung der Ziel-Basisstation anzugeben, wenn das Endgerät von der ersten Zelle an die zweite Zelle weitergereicht wird; und
N Anzeigefelder, wobei N eine ganze Zahl größer als 1 ist, wobei jedes Anzeigefeld einer Einheitszeit in dem voreingestellten Zeitraum entspricht und das Anzeigefeld verwendet wird, um anzugeben, dass in der dem Anzeigefeld entsprechenden Einheitszeit das Endgerät Daten unter Verwendung der Quell-Basisstation oder der Ziel-Basisstation überträgt, wenn das Endgerät von der ersten Zelle an die zweite Zelle weitergereicht wird.

8. System zum Weiterreichen, umfassend eine Quell-Basisstation (200) und eine Ziel-Basisstation (300);
wobei die Ziel-Basisstation (300) dazu konfiguriert ist, erste Angabeinformationen zu erlangen, die Quell-Basisstation (200) dazu konfiguriert ist, eine erste Nachricht zu empfangen, die durch die Ziel-Basisstation (300) gesendet wird, wobei sowohl ein erster Teil als auch ein zweiter Teil in der ersten Nachricht die ersten Angabeinformationen beinhalten, wobei der erste Teil ein Teil ist, auf dem die Quell-Basisstation (200) dazu konfiguriert ist, eine Analyse durchzuführen, und der zweite Teil ein Teil ist, auf dem die Quell-Basisstation (200) dazu konfiguriert ist, keine Analyse durchzuführen, und wobei die ersten Angabeinformationen eine Zeit angeben, während der ein Endgerät (100) getrennt Daten mit der Quell-Basisstation (200) und der Ziel-Basisstation (300) überträgt, wenn das Endgerät (100) von einer ersten Zelle der Quell-Basisstation (200) an eine zweite Zelle der Ziel-Basisstation (300) weitergereicht wird, und die erste Zelle und die zweite Zelle benachbarte Zellen derselben Frequenz sind; und
wobei die Quell-Basisstation (200) ferner dazu konfiguriert ist, nach dem Empfangen der ersten Nachricht, die durch die Ziel-Basisstation (300) gesendet wurde, nicht den zweiten Teil, der die ersten Angabeinformationen beinhaltet, zu analysieren, sondern den zweiten Teil, der die ersten Angabeinformationen beinhaltet, direkt an das Endgerät (100) zu senden.

## Revendications

1. Procédé de transfert, comprenant :
l'obtention (S401), par une station de base cible (300), de premières informations d'indication,
la réception (S402), par une station de base source (200), d'un premier message envoyé par la station de base cible (300), dans lequel à la fois une première partie et une seconde partie du premier message comportent les premières informations d'indication, dans lequel la première partie est une partie sur laquelle la station de base source (200) effectue une analyse, et la seconde partie est une partie sur laquelle la station de base source (200) n'effectue pas d'analyse, et dans lequel les premières informations d'indication indiquent un temps pendant lequel un dispositif terminal (100) transmet séparément des données avec la station de base source (200) et la station de base cible (300) lorsque le dispositif terminal (100) est transféré d'une première cellule de la station de base source (200) à une seconde cellule de la station de base cible (300), et la première cellule et la seconde cellule sont des cellules voisines intra-fréquence ;
dans lequel après la réception (S402) du premier message envoyé par la station de base cible (300), la station de base source (200) n'analyse pas la seconde partie comportant les premières informations d'indication, mais envoie directement (S303) la seconde partie comportant les premières informations d'indication au dispositif terminal (100).

2. Procédé selon la revendication 1, dans lequel avant la réception, par la station de base source, d'un premier message envoyé par la station de base cible, le procédé comprend également :
l'envoi (S501), par la station de base source, d'un second message à la station de base cible, dans lequel le second message comprend les premières informations d'indication.

3. Procédé selon la revendication 1, dans lequel avant la réception, par la station de base source, d'un premier message envoyé par la station de base cible, le procédé comprend également :
l'envoi (S601), par la station de base source, d'un second message à la station de base cible, dans lequel le second message comprend des secondes informations d'indication, les secondes informations d'indication étant déterminées par la station de base source pour indiquer un temps pendant lequel le dispositif terminal transmet séparément des données avec la station de base source et la station de base cible lorsque le dispositif terminal est transféré de la première cellule de la station de base source à la seconde cellule de la station de base cible, et les secondes informations d'indication étant différentes des premières informations d'indication.

4. Procédé selon la revendication 1, dans lequel l'obtention, par un premier terminal, d'informations d'indication de ressources comprend :
la réception (S501), par la station de base source, d'un second message à la station de base cible, dans lequel le second message comprend les premières informations d'indication.

5. Procédé selon l'une quelconque des revendications 1 à 4, dans lequel les premières informations d'indication indiquent également si le temps de transmission de données a été ajusté sur la base d'une différence de temps de système entre la station de base source et la station de base cible.

6. Procédé selon l'une quelconque des revendications 1 à 4, dans lequel les premières informations d'indication indiquent également que l'heure de transmission de données est basée sur une heure système de la station de base source ou une heure système de la station de base cible.

7. Procédé selon l'une quelconque des revendications 1 à 4, dans lequel les premières informations d'indication comprennent au moins l'un des éléments suivants :
une valeur d'index, dans lequel il existe une correspondance entre la valeur d'index et un temps pour transmettre séparément des données en utilisant la station de base source et la station de base cible lorsque le dispositif terminal est transféré de la première cellule à la seconde cellule ;
une première valeur, dans lequel la première valeur est utilisée pour indiquer un temps, dans une période prédéfinie, pour transmettre des données en utilisant la station de base source lorsque le dispositif terminal est transféré de la première cellule à la seconde cellule ;
une seconde valeur, dans lequel la seconde valeur est utilisée pour indiquer un temps, dans une période prédéfinie, pour transmettre des données en utilisant la station de base source lorsque le dispositif terminal est transféré de la première cellule à la seconde cellule ; et
N champs de l'indicateur, dans lequel N est un entier supérieur à 1, chaque champ d'indicateur correspond à une unité de temps dans la période prédéfinie, et le champ d'indicateur est utilisé pour indiquer que, dans l'unité de temps correspondant au champ d'indicateur, le dispositif terminal transmet des données en utilisant la station de base source ou la station de base cible lorsque le dispositif terminal est transféré de la première cellule à la seconde cellule.

8. Système de transfert, comprenant une station de base source (200) et une station de base cible (300) ;
la station de base cible (300) est configurée pour obtenir des premières informations d'indication, la station de base source (200) est configurée pour recevoir un premier message envoyé par la station de base cible (300), dans lequel à la fois la première partie et la seconde partie dans le premier message comportent les premières informations d'indication, dans lequel la première partie est une partie sur laquelle la base de station source (200) est configurée pour effectuer une analyse, et la seconde partie est une partie sur laquelle la station de base source (200) est configurée pour ne pas effectuer d'analyse, et dans lequel les premières informations d'indication indiquent un temps durant lequel un dispositif terminal (100) transmet des données séparément avec la station de base source (200) et la station de base cible (300) lorsque le dispositif terminal (100) est transféré de la première cellule de la station de base source (200) à une seconde cellule de la station de base cible (300), et la première cellule et la seconde cellule sont des cellules voisines intra-fréquence ; et
la station de base source (200) est également configurée pour, après la réception du premier message envoyé par la station de base cible (300), ne pas analyser la seconde partie comportant les premières informations d'indication, mais directement envoyer la seconde partie comportant les premières informations d'indication au dispositif terminal (100).
